# EUROPEAN PATENT APPLICATION

(11) **EP 0 692 614 A1**
(43) Date of publication of application: **17.01.1996**
(21) Application number: 95400234.1
(22) Date of filing: 03.02.1995
(51) Int. Cl.: F01L 3/06

(54) **Rotatable shrouded valve for improving a scavenging of 2-stroke engine**

(30) Priority: 14.07.1994 KR 9416912
(71) Applicant: KOREA INSTITUTE OF MACHINERY & METALS, Daejeon-Si (KR)
(72) Inventor: Jeong, Young-II, Yoosung-Ku, Daejeon-Si (KR); Lee, Jang-Hee, Yoosung-Ku, Daejeon-Si (KR); Kang, Kern-Yong, Seo-Ku, Daejeon-Si (KR)
(74) Representative: Hirsch, Marc-Roger

(57) **Abstract**

This invention relates to a scavenging shroud mechanism for improving a scavenging of 2-stroke engine, and more particularly to a scavenging shroud mechanism for improving a scavenging of 2-stroke engine which is made such that a scavenging shroud mechanism is provided to a scavenging valve whereby a compressed air sucked into interior of combustion chamber makes a tumble phenomenon along with cylinder wall surface and thereby pushing out already burned burnt gas and simultaneously being capable of efficiently feeding a new air so that efficient reverse loop scavenging system is made, and which is made such that a baffle 2, shroud supporter 3 and a shroud neck 4, and a supporting pin 6 provided not to be slid to up and down-ward direction with a scavenging valve 7, and a supporting groove 5 provided to inner side of intake manifold 9 by making a shroud supporter 3 to the baffle 2 so as to be inserted to said shroud supporter 3 so that the scavenging shroud mechanism 1 can do a up and down-ward movement but can not do a right and left rotational movement.

## Description

### BACKGROUND OF THE INVENTION

The present invention relates to a scavenging shroud mechanism for improving a scavenging of 2-stroke engine, and more particularly to a scavenging shroud mechanism for improving a scavenging of 2-stroke engine in which a scavenging shroud mechanism is provided to a scavenging valve whereby a compressed air sucked into interior of combustion chamber makes a tumble phenomenon along with cylinder wall surface and thereby pushing out already burned burnt gas and simultaneously being capable of efficiently feeding a new air so that efficient reverse loop scavenging system is made.

Since a conventional scavenging valve has a structure in which simple valve body is to be opened and closed to a valve seat, a new air could not be efficiently fed by pushing out a burnt gas within already burned combustion chamber by a compressed air fed through an intake manifold in a short intake and scavenging time period which is a technique to be most kernel in 2-stroke engine.

### SUMMARY OF THE INVENTION

The present invention is that, in order to eliminate such conventional disadvantage as that, which is added with a scavenging shroud mechanism to a scavenging valve.

### BRIEF DESCRIPTION OF THE DRAWINGS

FIG.1 is a perspective view of a scavenging shroud mechanism,
FIG.2 is a perspective view of a structure at a time when the scavenging shroud mechanism is assembled to a scavenging valve,
FIG.3 is a diagram of operating state at a time when the scavenging valve is closed, and
FIG.4 is a diagram of operating state at a time when the scavenging valve is opened.

### DETAILED DESCRIPTION OF THE INVENTION

Hereinafter, the present invention will be described more in detail with reference to the accompanying drawings.

In the drawings, the invention includes a scavenging shroud mechanism 1 constructed by a baffle 2, shroud supporter 3 and a shroud neck 4, and a supporting pin 6 provided not to be slid to up and down-ward direction with a scavenging valve 7,and a supporting groove 5 provided to inner side of intake manifold 9 by making a shroud supporter 3 to the baffle 2 so as to be inserted to said shroud supporter 3 so that the scavenging shroud mechanism 1 can do a up and down-ward movement but can not do a right and left rotational movement.

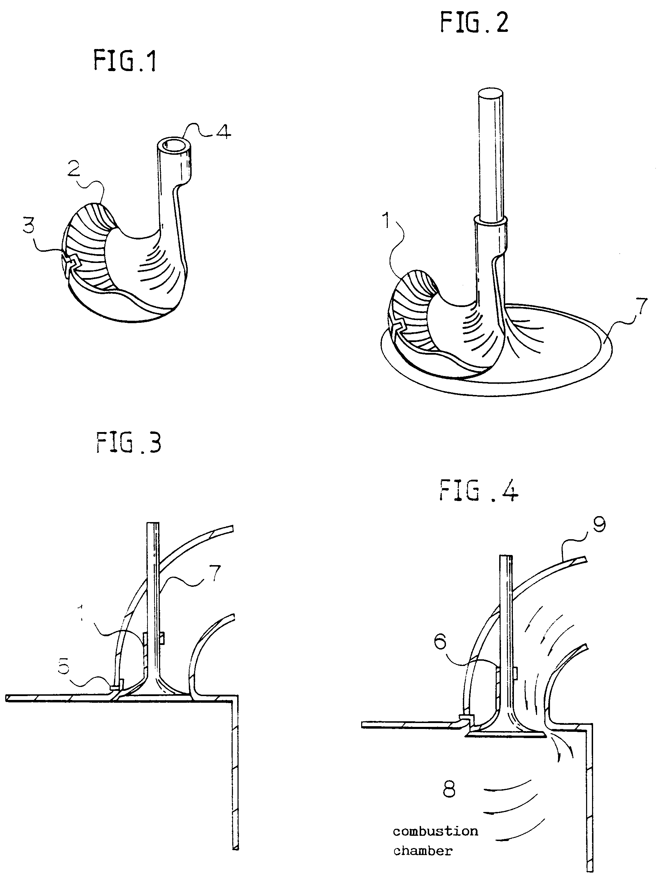

Operation and effect with structure of the invention constructed as these will be described more in detail as below. As shown in FIG.1, a scavenging shroud mechanism 1, a baffle 2, a shroud supporter 3 and a shroud neck 4 are included, and as shown in an assembled view of FIG.2, the scavenging shroud mechanism 1 is provided to a scavenging valve 7 through the shroud neck 4. The scavenging valve 7 does a up and down-ward movement and a right and left rotating movement, and the scavenging shroud mechanism 1 provided to the scavenging valve 7 is made to integral together with the scavenging valve 7 whereby doing a up and down-ward movement but does not a rotating movement toward right and left direction and has to keep a predetermined position. Accordingly, a supporting pin 6 is provided such that the scavenging shroud mechanism 1 is not slid to up and down-ward direction with the scavenging valve 7, and a shroud supporter 3 is made to the baffle 2 of the scavenging shroud mechanism 1 so that the supporting groove 5 provided to inner side of the intake manifold 9 is inserted to this shroud supporter 3 whereby the scavenging shroud mechanism 1 can do a up and down-ward movement but it can not do a right and left rotating movement.

Feature of the present invention is as follows:
the technique becoming a most kernel in 2-stroke engine is a scavenging technique for pushing out a burnt gas within already burned combustion chamber by a compressed air fed through the intake manifold 9 in a short intake and scavenging time period and efficiently feeding a new air;
and when viewing a function of scavenging shroud mechanism 1 of the present invention, as shown in FIG.3, when the scavenging valve 7 is closed, the compressed air of the intake manifold 9 can not be fed to the engine's combustion chamber 8, but as shown in FIG.4, when the scavenging valve 7 is opened, the compressed air is sucked to a portion having no scavenging shroud mechanism 1 (right side of the scavenging valve of FIG.4), but since the baffle 2 of the scavenging shroud mechanism 1 continuously shut the intake manifold 9, the compressed air can not be sucked to this portion (left side of the scavenging valve of FIG.4);
the compressed air sucked into interior of the combustion chamber makes a tumble phenomenon along with the cylinder wall surface by this operation whereby pushing out already burned burnt gas and simultaneously being capable of efficiently fed a new air and therefore it makes an efficient reverse loop scavenging system whereby a scavenging improvement of 2-stroke engine is made and hence it can be applied and utilized in designing; and
particularly, the right and left rotating movement of the scavenging valve 7 is operated as it is, and simultaneously the scavenging shroud mechanism 1 is made to a structure in which its right and left rotating direction is fixed while its upward direction can be operated together with the scavenging valve 7, therefore utilization is possible.

## Claims

1. Scavenging shroud mechanism for improving a scavenging of 2-stroke engine which is made such that a baffle 2, shroud supporter 3 and a shroud neck 4, and a supporting pin 6 provided not to be slid to up and downward direction with a scavenging valve 7, and a supporting groove 5 provided to inner side of intake manifold 9 by making a shroud supporter 3 to the baffle 2 so as to be inserted to said shroud supporter 3 so that the scavenging shroud mechanism 1 can do a up and downward movement but can not do a right and left rotational movement.
